# EUROPEAN PATENT APPLICATION

(11) **EP 2 995 537 A1**
(43) Date of publication of application: **16.03.2016**
(21) Application number: 15183809.1
(22) Date of filing: 04.09.2015
(51) Int. Cl.: B62J 1/02, B62J 1/06, B62J 1/08

(54) **DEVICE FOR SUPPORTING AND ANCHORING THE SEAT TO THE FRAME OF BICYCLES AND LIGHT TWO-WHEEL VEHICLES**

(30) Priority: 04.09.2014 IT FI20140200
(71) Applicant: FAP S.r.l., 50142 Firenze (IT)
(72) Inventor: ERMINI, Massimo, 50139 FIRENZE (IT)
(74) Representative: Savi, Massimiliano

(57) **Abstract**

A device for supporting the seat to the frame of bicycles, comprising a shock absorber block (10), a saddle post (11), connection means (12) to the saddle (13), associated with said saddle post (11), said shock absorber block (10) comprising a base (16) integral with said saddle post (11), at least one elastic element (17), reversibly compressible and expandable, fixed at a first end to said base (16), at least two Y-shaped connection joints (18) comprising a first arm at a first end and a second and a third arm at a second end, said arms being provided with a connection hole, a first connection element, integral with said base (16) and adapted to engage said second and third arms, a second connection element (22), integral with said connection means (12) and adapted to engage said first arm and the second end of said elastic element (17).

## Description

### Field of the invention

The present invention relates to the technical field of seats for two-wheel vehicles and to suspensions for the seats for two-wheel vehicles and in particular, to the technical field of bicycle seats and to suspensions for bicycle seats.

### State of the art

The seat (or saddle) of a bicycle constitutes, together with the pedals and handlebar, one of the contact points between the user cyclist and the bicycle. It is of fundamental importance to ensure the user has a comfortable seat and at the same time such as to allow the user's legs to push on the pedals effectively. Various types of bicycle seats exist, specifically designed to optimize the comfort of the cyclist during the use of the bicycle. Seats for road bicycles are generally characterized by a shape characterized by a narrow point which widens at the pelvis of the user, with high sides and cut out to allow the legs of the cyclist to push effectively on the pedals. Seats for off-road bicycles are generally larger, being longer and wider, and are often padded to offer a very comfortable seat. The shape of off-road bicycle seats is further adapted to allow the forward or backward movement of the pelvis of the user so as to allow the adaptation of the cyclist to the different conditions of the route.

All bicycle seats offer the user increased comfort and effectiveness of use when they are equipped with suitable suspensions, shock absorber systems adapted to absorb the vibrations and knocks transmitted to the cyclist through the wheels and the frame of the bicycle and resulting from the roughness of the road or path traveled.

### Summary of the invention

The suspension for bicycle seats according to the present invention ensures an increased level of comfort for the cyclist while at the same time having a simple structure and being characterized by a minimum number of components which allows the cost thereof to be minimized and the assembly and maintenance thereof to be facilitated, while maintaining an increased level of mechanical reliability and of use. The structure of the suspension according to the present invention is also suitable for being used for mopeds and light two-wheel vehicles.

### Brief description of the drawings

Further features and advantages of the present invention will become more apparent from the following detailed description, provided by way of non-limiting example and illustrated in the accompanying drawings, which are schematic and show functional blocks adapted to implement specific functions which, in practice, can be achieved according to different circuit solutions. In detail:

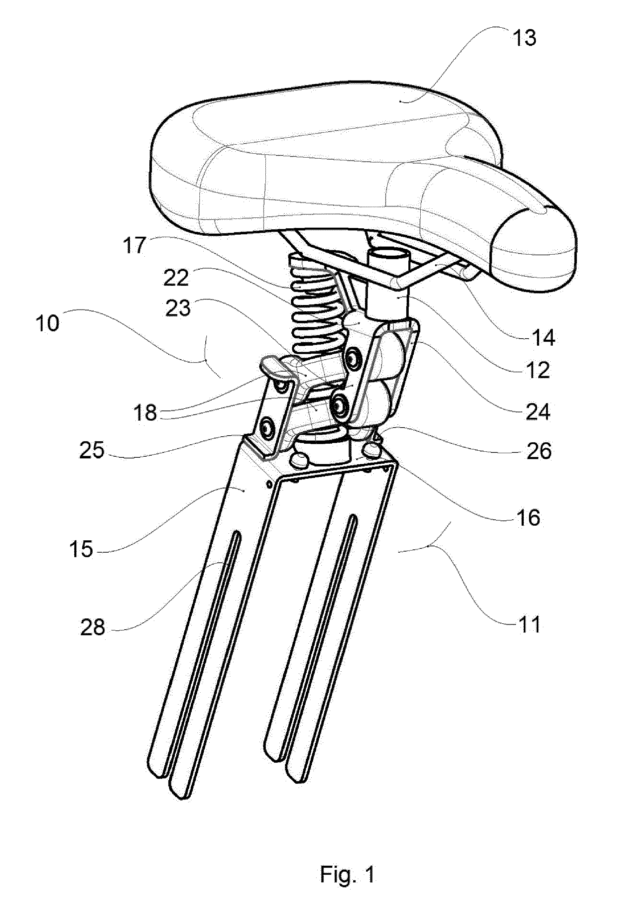

Figure 1 shows an axonometric view of a preferred embodiment of the suspension for bicycle seat and two-wheel vehicles according to the present invention;
figure 2 shows a perspective view of a preferred embodiment of the suspension for bicycle seat and two-wheel vehicles according to the present invention, in a first operating position;
figure 3 shows a perspective view of a preferred embodiment of the suspension for bicycle seat and two-wheel vehicles according to the present invention, in a second operating position;

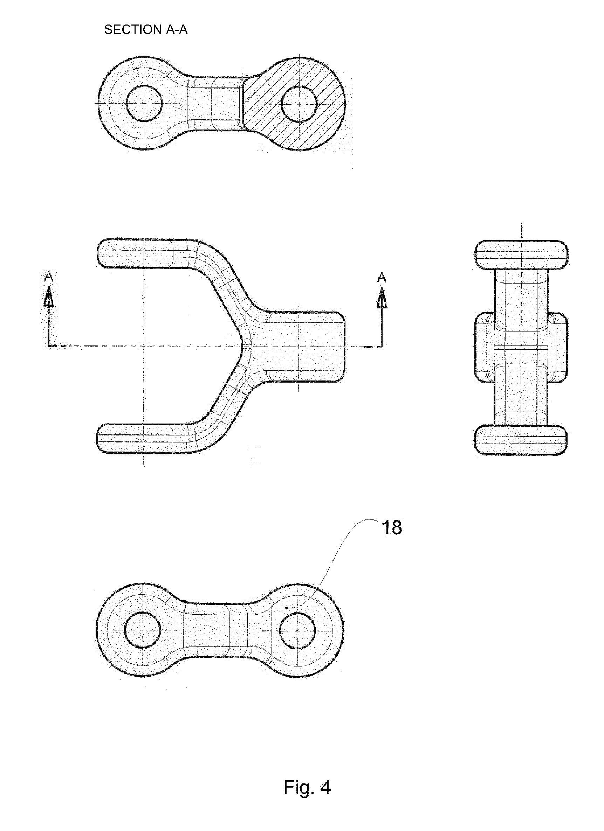

figure 4 shows a preferred embodiment of Y-shaped connection joints of a preferred embodiment of the suspension for bicycle seat and two-wheel vehicles according to the present invention.

### Detailed description of the invention

In reference to the accompanying figures, a preferred embodiment of the present invention comprises a shock absorber block 10 associated and integral with a bicycle saddle post 11, and with connection means 12 to a saddle of bicycle 13 or of light moped.

The shock absorber block 10 according to the present invention can be made compatible with the various frames and the various saddles for bicycle or light moped available by simply sizing appropriately said saddle post 11 and said connection means 12 to saddle 13.

In the case of bicycles, the saddle post 11 is typically adapted to be connected to the frame of the bicycle which generally consists of a metallic tube characterized by a non-standard diameter. A preferred embodiment of the present invention comprises a saddle post having an end comprising a tube, preferably made of chromium steel, having a diameter which can be selected in a range which extends from less than 25 millimeters to more than 30 millimeters. The most common and widespread measurements among saddle posts on the market today are in fact 27.2 millimeters for racing bicycles and 31.8 millimeters for off-road bicycles. Said saddle post 11 is fixed to the frame of the bicycle, for example by means of a screw which tightens a clamp or directly the upper part of the tube of the frame. Another fastening system provides the use of an expander which is fixed by means of a screw.

Other preferred embodiments of the saddle post 11 according to the present invention comprise a fork 15 adapted to engage a specific counterpart integral with the frame of the bicycle and provided with longitudinal apertures 28 for adjusting the fixing height thereof with respect to said frame.

Said connection means 12 to the saddle are adapted to interface with the saddles actually available on the market and can advantageously comprise mechanical devices of different types, corresponding to different types of saddles available.

In a preferred embodiment of the present invention, said connection means 12 to the saddle comprise a clamp (not shown in the accompanying figures) and relative tightening means, said clamp being adapted to engage the mounting track 14 of saddle 13.

Said shock absorber block 10 comprises preferably:
a base 16 integral with said saddle post 11;
at least one elastic element 17, reversibly compressible and expandable, fixed at a first end to said base 16 and preferably comprising an extension and compression spring;
at least two preferably Y-shaped connection joints 18 comprising a first arm 19 at a first end and a pair of arms comprising a second 20 and a third 21 arm at a second end, said arms being further provided with a connection hole;
a first connection element, integral with said base 16 and adapted to engage said second 20 and said third 21 arms of said at least two connection joints 18. Preferably said first connection element comprises a first 25 and a second 26 fixing bracket, each anchored to opposite ends of said first base 16, distanced in manner corresponding to said second 20 and said 21 third arms and comprising at least one hole at the connection hole of said second 20 and said third 21 arms.

A second connection element 22, integral with said connection means 12 to the saddle and adapted to engage said first arm 19 of said connection joints 18 and the second end of said elastic element 17. Preferably said second connection element 22 comprises a first U-shaped end having two side brackets 23, 24 adapted to house therein the end of the first arm 19 of said connection joints 18, and comprising at least one hole at the connection hole of said first arm 19, and a second end connected to the second end of said elastic element 17. Advantageously, said second 20 and said third 21 arms of said connection joints 18 are spaced out sufficiently so as to house therein said elastic element 17. Advantageously, said shock absorber block 10 further comprises a pair of said connection joints 18 arranged superimposed. Accordingly, said first 25 and said second 26 fixing brackets of said first connection element each comprise two holes at the holes in the ends of both the superimposed connection joints 18. Similarly, the side brackets 23, 24 of the first U-shaped end of said second connection element 22 each comprise two holes at the holes in the ends of both the superimposed connection joints 18.

To allow the elastic movement of the saddle with respect to said saddle post 11 and therefore with respect to the frame of the bicycle, said shock absorber block 10 is assembled so as to connect the ends of said connection joints 18 in pivoting manner to said first 25 and said second 26 fixing bracket of said first connection element, and to the side brackets 23, 24 of the first U-shaped end of said second connection element 22.

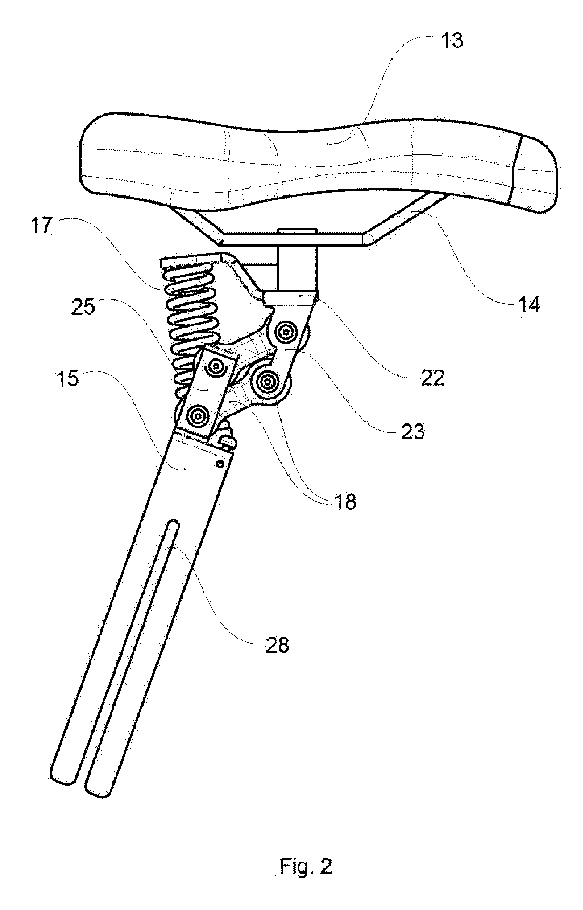

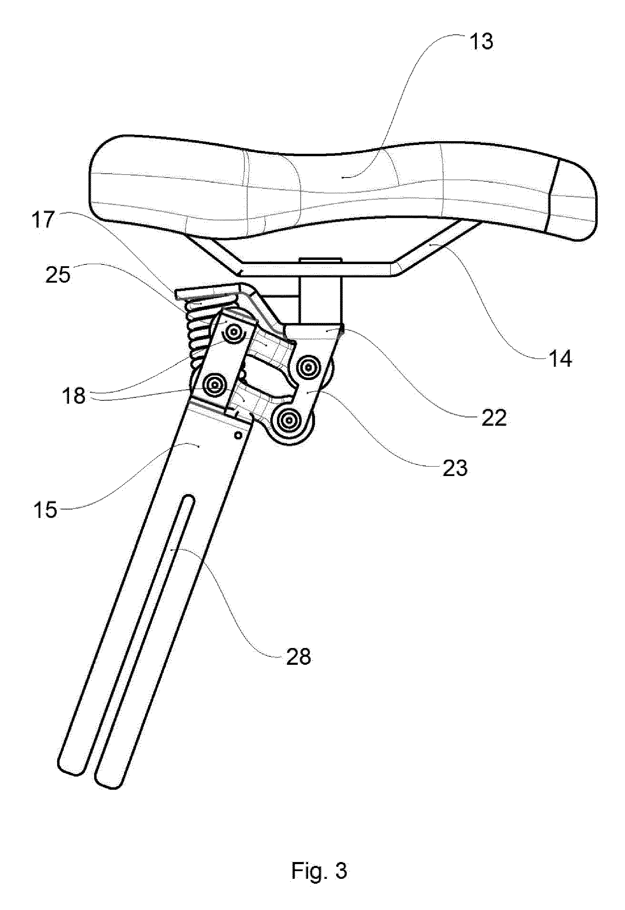

Thereby, the end of the first arm 19 of said connection joints 18 is free to rotate about the end of the second 20 and of the third 21 arm of said connection joints 18, at the compression and the extension of said elastic element 17. Following the movement described, the overall height of the shock absorber block 10 is variable from a maximum, illustrated in accompanying figure 2, to a minimum, illustrated in accompanying figure 3, depending on the compression undergone by the elastic element 17.

The shock absorber block 10 according to the present invention allows increased comfort of use for the cycling user to be obtained in all conditions, both on and off road, furthermore the simple structure and minimum number of components employed in the shock absorber block 10 according to the present invention make it particularly simple to assemble and maintain and mechanically very reliable, thus minimizing manufacturing, assembly and maintenance costs.

## Claims

1. A device for supporting and anchoring the seat to the frame of bicycles and light two-wheel vehicles, comprising a shock absorber block (10); a saddle post (11); connection means (12) to the saddle (13), associated with said saddle post (11), said shock absorber block (10) comprising: a base (16) integral with said saddle post (11); at least one elastic element (17), reversibly compressible and expandable, fixed at a first end to said base (16); at least two Y-shaped connection joints (18) comprising a first arm (19) at a first end and a pair of arms, comprising a second (20) and a third (21) arm, at a second end, said arms (19, 20, 21) being provided with a connection hole; a first connection element, integral with said base (16) and adapted to engage said second (20) and said third (21) arms of said at least two connection joints (18); a second connection element (22), integral with said connection means (12) to the saddle and adapted to engage said first arm (19) of said connection joints (18) and the second end of said elastic element (17).

2. A device according to claim 1, **characterized in that** said first connection element comprises a first (25) and a second (26) fixing bracket, each anchored to opposite ends of said first base (16), distanced in manner corresponding to said second (20) and said (21) third arms and comprising at least one hole at the connection hole of said second (20) and said third (21) arms.

3. A device according to one or more of the preceding claims, **characterized in that** said elastic element (17) comprises an extension and compression spring.

4. A device according to one or more of the preceding claims, **characterized in that** said second connection element (22) comprises a first "U"-shaped end having two side brackets (23, 24) adapted to house therein the end of the first arm (19) of said connection joints (18) therein, and comprising at least one hole at the connection hole of said first arm (19), and a second end connected to the second end of said elastic element (17).

5. A device according to one or more of the preceding claims, **characterized in that** said second (20) and said third (21) arms of said connection joints (18) are spaced out so as to house therein said elastic element (17).

6. A device according to one or more of the claims from 4 to 5, **characterized in that** said shock absorber block (10) comprises a pair of said connection joints (18) arranged superimposed; said first (25) and said second (26) fixing brackets of said first connection element each comprising two holes at the holes in the ends of both superimposed connection joints (18); said side brackets (23, 24) of the first U-shaped end of said second connection element (22) each comprise two holes, at the holes in the ends of both the superimposed connection joints (18), the ends of said connection joints (18) being connected in pivoting manner to said first (25) and said second (26) brackets of said first connection element, and to the side brackets (23, 24) of the first U-shaped end of said second connection element (22).

7. A device according to one or more of the preceding claims, **characterized in that** said saddle post (11) is adapted to be connected to a frame comprising a metallic tube by means of a screw which tightens a clamp or directly the upper part of the tube of the frame or by means of an expander.

8. A device according to one or more of the claims from 1 to 6, **characterized in that** said saddle post (11) comprises a fork (15) adapted to engage a specific counterpart integral with the frame and provided with longitudinal apertures (28) adapted to adjust the fixing height thereof with respect to said frame.

9. A bicycle comprising a device for supporting and anchoring the seat to the frame according to one or more of the claims from 1 to 8.
